Europäisches Patentamt

European Patent Office

Office européen des brevets

(11) Veröffentlichungsnummer: **0 509 306 A1**

## (12) EUROPÄISCHE PATENTANMELDUNG

(21) Anmeldenummer: **92105506.7**

(22) Anmeldetag: **31.03.92**

(51) Int. Cl.⁵: **A01B 73/00**, A01D 67/00, B60B 33/02

(30) Priorität: **13.04.91 DE 4112155**

(43) Veröffentlichungstag der Anmeldung:
**21.10.92 Patentblatt 92/43**

(84) Benannte Vertragsstaaten:
**FR GB**

(71) Anmelder: **Friedrich Mörtl**
**Schleppergerätebau GmbH & Co. KG**
**Kesslerstrasse 2**

**W-8780 Gemünden(DE)**

(72) Erfinder: **Grenzebach, Hans**
**Spessartweg 29**
**W-8780 Gemünden/Main(DE)**

(74) Vertreter: **Rehberg, Elmar, Dipl.-Ing.**
**Postfach 3162 Am Kirschberge 22**
**W-3400 Göttingen(DE)**

(54) **An einem Schlepper anhängbares Mähwerk.**

(57) Ein über eine Zugdeichsel (24) an einen Schlepper (1) anhängbares Mähwerk (6) ist mit einem Mähwerksrahmen (7) ausgestattet, der Schneidelemente (8) trägt und auch zwei Laufrädern (9,10) abgestützt ist, wobei die Laufräder (9,10) am Mähwerksrahmen (7) um etwa vertikale Schwenkachsen (15,16) lenkbar angeordnet sind, dadurch gekennzeichnet, daß an jedem Laufrad (9,10) vertikale Schwenkachsen (15,16') hinter dem Aufstandspunkt des Laufrads (9,10) angeordnet sind, daß jedes Laufrad (9,10) gegenüber dem Mähwerksrahmen (7) in einem durch Anschläge begrenzten Bereich (27) um seine vertikale Achse (15,16') schwenkbar gelagert und durch einen Kraftspeicher (32) in eine mittlere Stellung rückführbar ist.

Fig. 1

EP 0 509 306 A1

Die Erfindung bezieht sich auf ein über eine Zugdeichsel an einem Schlepper anhängbares Mähwerk, insbesondere Tellermähwerk, mit einem Mähwerksrahmen, der Schneidelemente trägt und auf zwei Laufrädern abgestützt ist, wobei die Laufräder am Mähwerksrahmen um etwa vertikale Schwenkachsen lenkbar angeordnet sind.

Aus der DE-PS 35 11 099 ist ein Mähwerk der eingangs beschriebenen Gattung bekannt, bei dem die den Maschinenrahmen tragenden Laufräder lenkbar ausgebildet sind. Die Lenkung wird vom Schleppersitz aus eingesteuert. Es sind hydraulische, pneumatische oder elektrische Mittel zum stufenlosen Verschwenken und Feststellen der Laufräder vorgesehen. Dies dient dazu, um ein Arbeiten auch an Hanglagen ohne Abdriften des Mähwerks sowie eine Umstellung von einer Arbeits- in eine Transportstellung mit geringer Transportbreite des Mähwerks zu ermöglichen. Die Zugdeichsel ist starr am Mähwerksrahmen angeordnet, so daß der jeweilige Lenkausschlag der Laufräder den seitlichen Versatz bestimmt, mit welchem das Mähwerk hinter oder seitlich versetzt neben dem Schlepper läuft. Es ergeben sich damit eine Queranordnung des Mähwerks in einer Arbeitsstellung sowie entsprechend viele Schräganordnungen in den anderen Stellungen. Das Arbeiten mit einem solchen schleppergezogenen Mähwerk in Hanglagen ist in hohem Maß von der Geschicklichkeit des Fahrers abhängig. Dieser muß nämlich einmal die Lenkbewegungen des Schleppers steuern und zum anderen die Lenkbewegungen der Laufräder des Mähwerks. Hierzu ist es erforderlich, die Fahrtrichtung nach vorn und den Hangabtrieb nach hinten zu beobachten und die entsprechenden Gegensteuerungen auszuführen.

Der Erfindung liegt die Aufgabe zugrunde, ein Mähwerk der eingangs beschriebenen Art bereitzustellen, welches einem Abdriften am Hang selbsttätig entgegenwirkt.

Erfindungsgemäß wird dies dadurch erreicht, daß an jedem Laufrad die vertikale Schwenkachse hinter dem Aufstandpunkt des Laufrads angeordnet ist, daß jedes Laufrad gegenüber dem Mähwerksrahmen in einem durch Anschläge begrenzten Bereich um seine vertikale Achse schwenkbar gelagert und durch einen Kraftspeicher in eine mittlere Stellung rückführbar ist.

Die oder jedenfalls eine vertikale Schwenkachse, um welche das Laufrad schwenkbar ist, muß hinter dem Aufstandpunkt bzw. der durch den Aufstandpunkt gehenden Vertikalachse des Rads angeordnet sein. Die vertikale Schwenkachse durchdringt die Horizontalebene exakt hinter dem Aufstandpunkt des Laufrads, und zwar ohne seitlichen Versatz. Das Laufrad ist um diese vertikale Schwenkachse zunächst einmal frei schwenkbar gelagert, wobei diese Schwenkbarkeit sich nur auf einen durch Anschläge begrenzten Schwenkbereich erstreckt. Das Laufrad ist diesbezüglich etwa gegensätzlich zu einem Nachlaufrad ausgebildet und besitzt eine gewisse Instabilität, so daß es infolge der auf es einwirkenden Kräfte selbsttätig eine Lenkbewegung in dem vorgesehenen Bereich ausführt. Diese Lenkbewegung ist so gerichtet, daß der Hangabtriebskraft entgegengewirkt wird. Damit tritt eine automatische Wirkung ein und es entfällt das bewußte Einsteuern einer Lenkkraft, um der Hangabtriebskraft entgegenzuwirken. Da Hanglagen unterschiedlich geneigt sind, ist ein Kraftspeicher vorgesehen, der vorzugsweise einstellbar ist und der je nach der Neigung des Hangs unterschiedliche, selbsttätige Lenkausschläge des jeweiligen Laufrads zuläßt. Sobald das Mähwerk auf einer horizontalen Fläche bewegt wird, verschwindet die Kraftkomponente der Hangabtriebskraft und der Kraftspeicher führt das Laufrad in eine mittlere Stellung zurück. Diese mittlere Stellung ist einer geringfügigen Schräganordnung der Laufräder zur Fahrtrichtung zugeordnet, um dem Geradeziehen des Mähwerks in der seitlich versetzt zum Schlepper befindlichen Arbeitsstellung entgegenzuwirken.

Der Hauptvorteil dieser neuen Hangnachlaufsteuerung ist in ihrer automatischen Wirkung zu sehen. Darüberhinaus ist der bauliche Aufwand vergleichsweise gering und es können sogar ausschließlich mechanische Mittel eingesetzt werden. Eine aufwendige Hydrauliksteuerung für solche Lenkbewegungen entfällt, wenngleich an dem Mähwerk für andere Zwecke, beispielsweise zum Überführen des Mähwerks von der Arbeitsstellung in die Transportstellung und umgekehrt, eine Hydrauliksteuerung vorgesehen sein kann.

Es versteht sich, daß der Kraftspeicher mit symmetrischer Wirkung zu der mittleren Stellung ausgebildet ist, da mit dem Mähwerk bei Hin- und Herfahrt quer zum Hang gearbeitet werden kann. Der Kraftspeicher kann, muß jedoch nicht, eine Vorspannkraft auf die mittlere Stellung hin ausüben.

Der Kraftspeicher ist zweckmäßig einstellbar ausgebildet, um einerseits eine Einstellbarkeit an das Gewicht des Mähwerks und den Abstand der vertikalen Schwenkachse vom Aufstandpunkt des Laufrads zu ermöglichen. Andererseits kann, falls dies überhaupt erforderlich sein sollte, hierdurch eine zusätzliche Feinanpassung an die Neigung des Hangs erfolgen.

Auch die Anschläge und damit der Verschwenkbereich können einstellbar ausgebildet sein. Im allgemeinen kommt ein Verschwenkbereich von ca. 2° nach jeder Seite, also von insgesamt 4°, in Frage, wobei andere Winkel durchaus denkbar sind.

Für die Ausbildung des Kraftspeichers bieten sich verschiedene Realisierungsmöglichkeiten an.

Besonders einfach wird die Konstruktion, wenn als Kraftspeicher zwei Federn vorgesehen sind, die symmetrisch zur mittleren Stellung angeordnet sind. Es versteht sich, daß diese Federn identisch ausgebildet sind. Sie können zusätzlich vorspannbar gelagert sein, um bereits die Stellung des Laufrads zu belasten, so daß die Hangabtriebssteuerung nur dann in Funktion tritt, wenn der Hang eine gewisse Mindestneigung aufweist.

In bevorzugter Ausführungsform kann für jedes Laufrad eine das Radlager tragende Radgabel vorgesehen sein, die S-förmig gekrümmt ausgebildet ist und an der ein die vertikale Achse bildendes Schwenklager angeordnet ist, das mit dem Maschinenrahmen bzw. einem dort vorgesehenen Ausleger verbunden ist. Die Radgabel und damit das Laufrad ist um dieses Schwenklager begrenzt schwenkbar, und zwar unabhängig von zusätzlichen Lenksteuerungen, die über z. B. hydraulische Mittel ausgelöst werden können.

Dabei kann eine U-förmige Platte mit der Radgabel drehfest verbunden sein und an der Radgabel ein Anschlagträger drehbar gelagert sein, wobei der Anschlagträger einen Mittenanschlag trägt und zwischen der U-förmigen Platte und dem Mittenanschlag in symmetrischer Anordnung die beiden Federn vorgesehen sind. Dies ist eine übersichtliche Konstruktion, bei der infolge ihrer Anordnungsmöglichkeit im oberen Bereich der Radgabel bzw. hinter dieser auch eine gute Zugänglichkeit zu Verstellzwecken gegeben ist. Diese Konstruktion kann bei beiden Radgabeln angewendet werden. Wenn sie nur auf einer Seite verwirklicht wird, wird das andere Rad über eine Spurstange ohne Langloch geführt.

Die U-förmige Platte kann zwei mit dem Mittenanschlag zusammenwirkende, den Schwenkbereich begrenzende Schrauben aufweisen, wobei die Federn auch auf den Schrauben gelagert sein können, so daß eine gesonderte Lagerung für den Kraftspeicher in Fortfall kommt. Auf jeder der Schrauben kann eine frei einstellbare Mutter angeordnet sein, um die Vorspannung der Feder einzustellen.

Die Erfindung wird anhand bevorzugter Ausführungsbeispiele weiter erläutert und beschrieben. Es zeigen:

Figur 1    eine Draufsicht auf die Einheit aus Schlepper und Mähwerk in der Arbeitsstellung und in der Transportstellung,

Figur 2    eine Draufsicht auf das Mähwerk zur Verdeutlichung der verschiedenen Verschwenkwinkel,

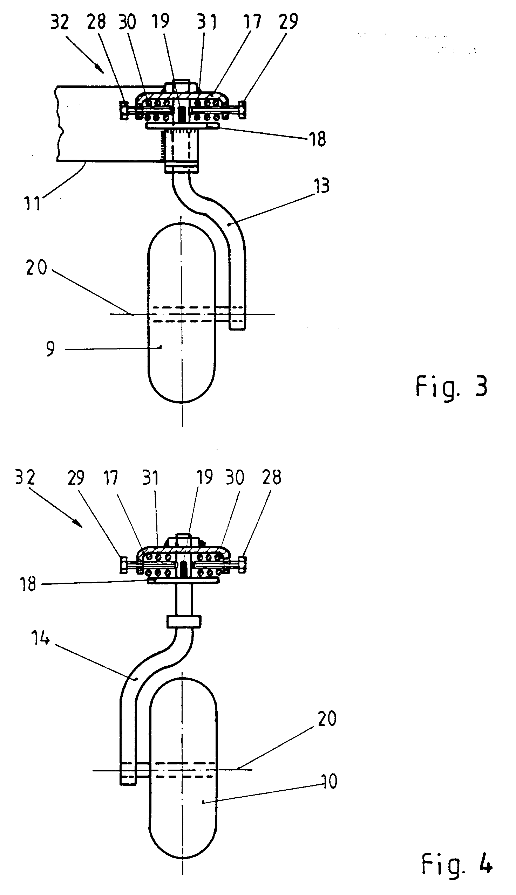

Figur 3    eine Ansicht des linken Laufrads von hinten und

Figur 4    eine Ansicht des rechten Laufrads von hinten.

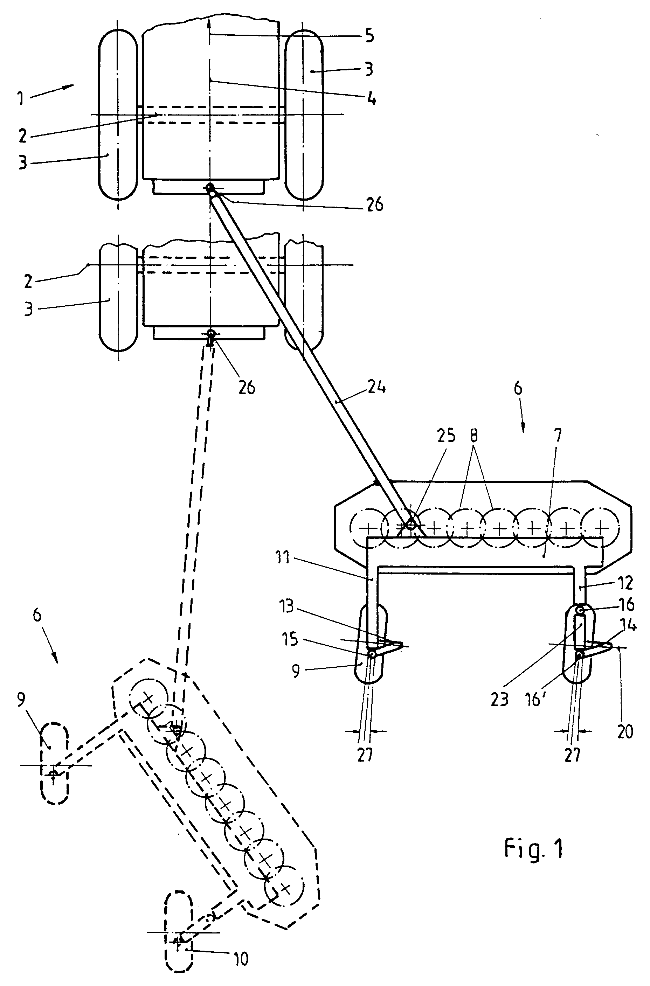

In Figur 1 ist stark schematisiert ein Schlepper 1 mit seiner Hinterachse 2 und den Hinterrädern 3 angedeutet. Der Schlepper weist eine Längsmittelachse 4 auf. Die Fahrtrichtung ist durch einen Pfeil 5 gekennzeichnet.

Ein Mähwerk 6 befindet sich in Arbeitstellung (durchgezogene Linienführung) rechts neben dem Schlepper 1 versetzt, in Fahrtrichtung gemäß Pfeil 5 gesehen. Das Mähwerk 6 weist einen Mähwerksrahmen 7 auf, dessen wesentlicher Bestandteil ein quer durchgehender Träger ist, der somit in Arbeitsstellung quer, also rechtwinklig zur Fahrtrichtung gemäß Pfeil 5 ausgerichtet, von dem Schlepper gezogen wird. An dem Mähwerksrahmen 7 sind Schneidelemente 8, z. B. als Mähteller oder als Mähtrommeln, vorgesehen. Oft sind diese Schneidelemente 8 an einem gesonderten Mähholm oder Mähbalken angeordnet, der seinerseits wiederum von dem Mähwerksrahmen 7 getragen wird. Der Mähwerksrahmen 7 ist über Laufräder 9 und 10 am Boden abgestützt. Hierzu besitzt der Mähwerksrahmen 7 Ausleger 11 und 12, die an ihrem hinteren Ende jeweils in Lagerschalen enden. Die Laufräder 9 und 10 besitzen Radgabeln 13 und 14, wobei die jeweilige Radgabel die jeweilige Achse des Laufrads trägt. Die Radgabel 13 bildet eine vertikale Achse 15, um die das Laufrad schwenkbar gelagert ist. Diese Verschwenkbarkeit betrifft sowohl die Lenkung des Laufrads 9, wenn das Mähwerk 6 aus der Arbeitsstellung in die Transportstellung und umgekehrt bewegt wird, einerseits sowie andererseits eine Verschwenkung, die der Hangabtriebssteuerung zugeordnet ist.

Bei dem rechten Laufrad 10 sind diese beiden Verschwenkmöglichkeiten getrennt voneinander realisiert. Die Radgabel 14 bildet eine etwa vertikale Achse 16', um die die Verschwenkung des Laufrads 10 entgegen der Hangabtriebskraft erfolgt. Darüberhinaus ist noch eine vertikale Achse 16 vorgesehen, um die ein Lenker 23 verschwenkbar angeordnet ist, so daß das Laufrad 10 bezüglich der vertikalen Achse 16 ein Nachlaufrad darstellt, welches stabilisierend der jeweiligen Lenkbewegung folgt.

Für eine aktive Lenkung des linken Laufrads 9 z. B. bei der Umstellung des Mähwerks aus der Arbeitsstellung in die Transportstellung, ist an der Radgabel 13 eine einen Lenker bildende, U-förmige Platte 17 vorgesehen bzw. mit der Radgabel 13 drehfest verbunden. Auf der Radgabel 13 und somit um die vertikale Achse 15 ist ein Anschlagträger 18, der einen Mittenanschlag 19 aufweist, angeordnet. Die Radgabel 13 trägt andererseits die Radachse 20 des Laufrads 9. Man erkennt, daß die vertikale Achse 15 gegenüber dem Aufstandspunkt des Laufrads 9 bzw. einer durch den Aufstandspunkt und die Radachse 20 gehenden Vertikalachse nach hinten versetzt angeordnet, und zwar ohne seitlichen Versatz.

Der Anschlagträger 18 des linken Rads weist ein Gelenk 21 auf, an dem eine Spurstange 22 angreift, die zu dem Lenker 23 an dem anderen Laufrad 10 führt. Für die automatische Hangabdriftsteuerung ist diese Spurstange 22 ohne Belang. Die Spurstange 22 gehört zu dem Teil der bewußt einsteuerbaren Lenkung der Laufräder 9 und 10, wie sie beim Verschwenken des Mähwerks 6 aus der Arbeitsstellung in die Transportstellung und umgekehrt genutzt wird. Hierzu gehört auch eine Zugdeichsel 24, die in einem Schwenklager 25 am Mähwerksrahmen 7 schwenkbar gelagert ist und auch an ihrem anderen Ende ein Schwenklager 26 trägt, mit welchem sie gelenkig am Schlepper 1 befestigt ist.

Zur Realisierung der automatischen Hangabtriebssteuerung ist das Laufrad 9 um die vertikale Achse 15 in einem begrenzten Winkel bzw. Bereich 27 um die Achse 15 frei schwenkbar gelagert. Dieser Winkel bzw. Bereich 27 ergibt sich aus dem Zusammenwirken des Mittenanschlags 19 und zweier Schrauben 28 und 29, die auf der U-förmigen Platte 17 gelagert sind und relativ zum Mittenanschlag 19 verstellbar angeordnet sind. Vorzugsweise um die Schrauben 28 und 29 herum innerhalb des von der U-förmigen Platte 17 umschlossenen Bereichs sind zwei Federn 30 und 31 gelagert, die bei Lenkausschlägen mit dem Mittenanschlag 19 zusammenwirken. Die Federn 30 und 31 können so ausgebildet und angeordnet sein, daß sie eine Vorspannung auf den Mittenanschlag 19 ausüben, so daß dieser auch in einer Mittelstellung kraftmäßig belastet ist. Die Vorspannung läßt sich beispielsweise in einfacher Weise durch eine frei drehbare Mutter (nicht dargestellt) auf der Schraube 28 bzw.. 29 verwirklichen, die das jeweilige äußere Federauflager bildet. Es ist aber auch möglich, auf eine Vorspannung zu verzichten, so daß in der mittleren Stellung die Federn 30 und 31 gerade entlastet sind.

Wirkt infolge des Arbeitens mit dem Mähwerk 6 in einer Hanglage bei einer Fahrt in Richtung gemäß Pfeil 5 quer zum Hang eine Kraftkomponente des Gewichts des Mähwerks 6 letztlich über den Ausleger 11 auf die Radgabel 13 ein, so führt dies dazu, daß je nach der Wirkrichtung der Kraft das Laufrad 9 eine selbsttätige Lenkbewegung innerhalb des Bereichs 27 nach der einen Seite ausführt, und zwar so, daß sich das Laufrad 9 gegenüber der Fahrtrichtung gemäß Pfeil 5 in der Weise leicht schrägstellt, daß die vom Hangabtrieb hervorgerufene Kraftkomponente kompensiert bzw. dieser entgegengewirkt wird. Das Abdriften des Mähwerks 6 am Hang wird damit selbsttätig vermieden.

In gleicher Weise stellt sich eine Wirkung auch an dem Laufrad 10 ein, wobei hier die konstruktive Ausbildung und die Wirkverhältnisse entsprechend sind. Der diesbezüglichen Funktion der vertikalen Achse 15 des Laufrads 9 ist hier die vertikale Achse 16' des Laufrads 10 vergleichbar. Auch hier wird von den Teilen 17, 18, 19, 30, 31 ein Kraftspeicher 32 gebildet, der durch die beiden Federn 30, 31 symmetrisch ausgebildet ist. Ebenso wie die vertikale Achse 15 des Laufrads 9 hinter der Radachse 20 liegt, ist auch hier beim Laufrad 10 die vertikale Achse 16' hinter der Radachse 20 angeordnet. Der Abstand beträgt beispielsweise 100 mm in Fahrtrichtung gemäß Pfeil 5.

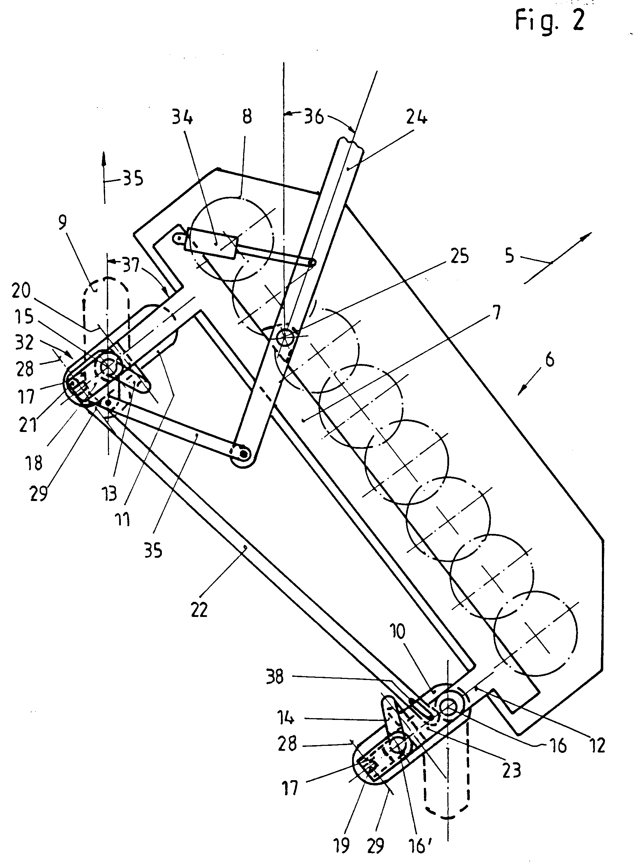

Für gezielte Lenkbewegungen der Laufräder 9 und 10, beispielsweise zum Verstellen des Mähwerks 6 aus der Arbeitsstellung in die Transportstellung bzw. umgekehrt dient ein Hydraulikzylinder 34, der einerseits gelenkig am Mähwerksrahmen 7 und andererseits gelenkig an der Zugdeichsel 24 angreift. Das hintere freie Ende 33 der Zugdeichsel 24 ist gelenkig über einen Lenker 35 mit dem Anschlagträger 18 verbunden, so daß insoweit das Laufrad 9 (Figur 2) aus der durchgezogen dargestellten Stellung in Arbeitsstellung in die gestrichelt dargestellte Stellung in der Transportstellung verschwenkbar ist. Die zugehörige Verschwenkung des Laufrads 10 wird durch die Bewegung der Spurstange 22 auf den Lenker 23 des Laufrads 10 übertragen, wobei hierbei jetzt das Laufrad 10 um die vertikale Achse 16 verschwenkt. Die vertikale Achse 16 ist vor der Radachse 20 angeordnet. Die Fahrtrichtung in der Transportstellung ist durch einen Pfeil 35 gekennzeichnet. Bei einer solchen Verschwenkung durch Betätigung des Hydraulikzylinders 34 wird die Zugdeichsel 24 um einen Verschwenkwinkel 36 und die Laufräder 9 und 10 um einen vergleichsweise größeren Verschwenkwinkel 37 verschwenkt. Die Spurstange 22 trägt ein Langloch 38, welches so angeordnet ist, daß das Laufrad 10 in der Transportstellung des Mähwerks 6 als echtes Nachlaufrad ausgebildet ist und sich um die vertikale Achse 16 in gewissem Bereich unabhängig von dem Laufrad 9 verschwenken kann. Damit sind enge Kurven in der Transportstellung befahrbar. Die Hangabtriebssteuerung ist davon unabhängig.

**Bezugszeichenliste:**

| | |
|---|---|
| 1 | = Schlepper |
| 2 | = Hinterachse |
| 3 | = Hinterrad |
| 4 | = Längsmittelachse |
| 5 | = Pfeil |
| 6 | = Mähwerk |
| 7 | = Mähwerksrahmen |
| 8 | = Schneidelement |
| 9 | = Laufrad |
| 10 | = Laufrad |

11  =  Ausleger
12  =  Ausleger
13  =  Radgabel
14  =  Radgabel
15  =  vertikale Achse
16  =  vertikale Achse
17  =  U-förmige Platte
18  =  Anschlagträger
19  =  Mittenanschlag
20  =  Radachse
21  =  Gelenk
22  =  Spurstange
23  =  Lenker
24  =  Zugdeichsel
25  =  Schwenklager
26  =  Schwenklager
27  =  Bereich
28  =  Schraube
29  =  Schraube
30  =  Feder
31  =  Feder
32  =  Kraftspeicher
33  =  Ende
34  =  Hydraulikzylinder
35  =  Pfeil
36  =  Verschwenkwinkel
37  =  Verschwenkwinkel
38  =  Langloch

**Patentansprüche**

1.  Über eine Zugdeichsel an einen Schlepper anhängbares Mähwerk, insbesondere Tellermähwerk, mit einem Mähwerksrahmen, der Schneidelemente trägt und auf zwei Laufrädern abgestützt ist, wobei die Laufräder am Mähwerksrahmen um etwa vertikale Schwenkachsen lenkbar angeordnet sind, dadurch gekennzeichnet, daß an jedem Laufrad (9, 10) vertikale Schwenkachsen (15, 16') hinter dem Aufstandspunkt des jeweiligen Laufrads (9, 10) angeordnet sind, daß jedes Laufrad (9, 10) gegenüber dem Mähwerksrahmen (7) in einem durch Anschläge (19, 28, 29) begrenzten Bereich (27) um seine vertikale Achse (15 bzw. 16') schwenkbar gelagert und durch einen Kraftspeicher (32) in eine mittlere Stellung rückführbar ist.

2.  Mähwerk nach Anspruch 1, dadurch gekennzeichnet, daß der Kraftspeicher (32, 30, 31) einstellbar ausgebildet ist.

3.  Mähwerk nach Anspruch 1, dadurch gekennzeichnet, daß die Anschläge (28, 29) einstellbar sind.

4.  Mähwerk nach einem der Ansprüche 1 bis 3, dadurch gekennzeichnet, daß als Kraftspeicher (32) zwei Federn (30, 31) vorgesehen sind, die symmetrisch zur mittleren Stellung angeordnet sind.

5.  Mähwerk nach Anspruch 4, dadurch gekennzeichnet, daß die Federn (30, 31) vorspannbar gelagert sind.

6.  Mähwerk nach einem der Ansprüche 1 bis 5, dadurch gekennzeichnet, daß für jedes Laufrad (9, 10) eine das Radlager tragende Radgabel (13, 14) vorgesehen ist, die S-förmig gekrümmt ausgebildet ist und an der ein die vertikale Achse (15, 16') bildendes Schwenklager angeordnet ist, das mit dem Maschinenrahmen (7) verbunden ist.

7.  Mähwerk nach Anspruch 6, dadurch gekennzeichnet, daß mit der Radgabel (13, 14) eine U-förmige Platte verbunden ist und an der Radgabel (13, 14) ein Anschlagträger (18) drehbar gelagert ist, wobei der Anschlagträger (18) einen Mittenanschlag (19) trägt und zwischen der U-förmigen Platte (17) und dem Mittenanschlag (19) in symmetrischer Anordnung die beiden Federn (30, 31) vorgesehen sind.

8.  Mähwerk nach Anspruch 6 und 7, dadurch gekennzeichnet, daß die U-förmige Platte (17) zwei mit dem Mittenanschlag (19) zusammenwirkende, den Schwenkbereich begrenzende Schrauben (28, 29) aufweist.

9.  Mähwerk nach Anspruch 7 und 8, dadurch gekennzeichnet, daß die Federn (30, 31) auf den Schrauben (28, 29) angeordnet sind.

10. Mähwerk nach Anspruch 7 bis 9, dadurch gekennzeichnet, daß auf jeder Schraube eine frei einstellbare Mutter angeordnet ist.

Fig. 1

Fig. 2

Fig. 3

Fig. 4

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 479 104 (SAXBY)<br>* Seite 1, Zeile 39 - Seite 2, Zeile 11 *<br>* Seite 2, Zeile 39 - Seite 3, Zeile 28;<br>Abbildungen 1-4 *<br>--- | 1,4,5,9 | A01B73/00<br>A01D67/00<br>B60B33/02 |
| A | DE-A-3 810 372 (VEB KOMBINAT FORTSCHRITT LANDMASCHINEN NEUSTADT)<br>* Spalte 1, Zeile 60 - Spalte 2, Zeile 62;<br>Abbildungen 1,2 *<br>--- | 1,4 | |
| A | GB-A-2 082 436 (ALOIS POTTINGER MASCHINENFABRIK GMBK)<br>* Seite 2, Zeile 89 - Seite 2, Zeile 105 *<br>* Seite 2, Zeile 119 - Seite 3, Zeile 3 *<br>* Seite 3, Zeile 22 - Seite 3, Zeile 21;<br>Abbildungen 1,2 *<br>--- | 1 | |
| A | DE-U-8 808 847 (CLASS SALGAU GMBH)<br>* Abbildungen 1,2 *<br>--- | 1 | |
| D,A | DE-A-3 511 099 (CLASS SALGAU GMBH)<br>----- | | **RECHERCHIERTE SACHGEBIETE (Int. Cl.5 )**<br><br>A01B<br>A01D<br>B60B |

Der vorliegende Recherchenbericht wurde für alle Patentansprüche erstellt

| Recherchenort | Abschlußdatum der Recherche | Prüfer |
|---|---|---|
| DEN HAAG | 10 JULI 1992 | ECCETTO M. |